# EUROPÄISCHE PATENTSCHRIFT

(11) **EP 1 604 775 B1**
(45) Veröffentlichungstag und Bekanntmachung des Hinweises auf die Patenterteilung: **23.04.2008**
(21) Anmeldenummer: 05004993.1
(22) Anmeldetag: 08.03.2005
(51) Int. Cl.: B23Q 3/155, B23Q 7/04

(54) **Speicheranordnung für Bearbeitungsmaschinen**
Storage arrangement for machining center
Dispositif de stockage pour centre d'usinage

(30) Priorität: 10.06.2004 DE 102004028151
(43) Veröffentlichungstag der Anmeldung: 14.12.2005
(73) Patentinhaber: Mikron Agie Charmilles AG, 2560 Nidau (CH)
(72) Erfinder: Lüscher, Thomas, 5053 Staffelbach-Wittwil (CH)
(74) Vertreter: Weiss, Wolfgang

(56) Entgegenhaltungen:
- EP-A- 0 462 533
- WO-A-03/072300
- DE-C1- 10 218 236
- US-A- 4 587 716

## Beschreibung

Die Erfindung bezieht sich auf eine Speicheranordnung für Bearbeitungsmaschinen gemäss dem Oberbegriff des Anspruchs 1.

Für die Bearbeitung von Werkstücken aus Metall, Kunststoff oder anderen Werkstoffen werden zunehmend programmierbare und vom Computer überwachte sogenannte Bearbeitungszentren eingesetzt. Ein Bearbeitungszentrum besteht im Wesentlichen aus einem Tisch auf dem während der Bearbeitung ein Werkstück definiert festgehalten werden kann. Zur definierten Befestigung der Werkstücke dienen sogenannte Paletten oder Werkstückträger. Für die maschinelle Bearbeitung des Werkstückes werden verschiedenartige Werkzeuge beispielsweise zum Bohren, Fräsen, Räumen, Sägen, Schneiden oder Hobeln eingesetzt. Das Werkstück kann, je nach Form des Ausgangsmaterials und je nach Form des gewünschten Fertigproduktes von mehreren Seiten bearbeitet werden. Die Werkstücke und die Werkzeuge können in Bezug zu einander linear und/oder rotierend bewegt werden. Man definiert drei bis sechs Achsen für die Bewegung: X, Y und Z für die Linearbewegungen und A, B und C für die Rotationsbewegungen. Um eine effiziente Serienproduktion zu erreichen, wird eine Vielzahl von Bearbeitungsschritten mit verschiedenen Werkzeugen an einer Anzahl von Werkstücken für einen längeren Zeitabschnitt im Voraus programmiert. Durch die Bearbeitung werden die Werkzeuge auch abgenutzt. Es ist also eine Vielzahl von Werkzeugwechseln notwendig. Für die übersichtliche Anordnung der Werkzeuge und der unbearbeiteten und bearbeiteten Werkstücke sind Speicheranordnungen vorgesehen, die von programmgesteuerten Manipulatoren oder Industrie-Robotern bedient werden. Die sogenannte Span zu Span Werkzeugwechselzeit, d.h. die Zeit, die die Maschine für den Wechsel des Werkzeuges benötigt, soll für eine hohe Effizienz möglichst kurz sein. Die Bereitstellungszeit, d.h. die Zeit, die die Maschine für weitere Werkzeuge laufend bereitsteht, liefert ebenfalls einen entscheidenden Beitrag zur Effizienzsteigerung. Der Energieverbrauch beim Werkzeug- oder Werkstückwechsel soll möglichst gering gehalten werden.

Aus der WO 2003072300 A1 ist eine Anordnung zum Wechseln und Speichern von Werkzeugen für ein Bearbeitungszentrum bekannt. Am Innenumfang eines teilringförmigen Gestells ist eine Vielzahl von Werkzeughalterungen ausgebildet. Ein drehbarer Arm hat zwei Greifvorrichtungen, wobei die erste Greifvorrichtung zum Einlagern und die zweite Greifvorrichtung zum Auslagern der Werkzeuge dient. Die Greifvorrichtungen weisen eine Ausprägung oder eine Schräge auf, die zusammenwirkt mit einem Finger an der Werkzeughalterung. Hiermit wird erreicht, dass das Werkzeug in einer definierten Orientierung ein- und ausgelagert wird.

Ausgehend von diesem Stand der Technik ist es Aufgabe der Erfindung, eine Speicheranordnung für Bearbeitungsmaschinen anzugeben, die eine möglichst effiziente und möglichst energiegünstige Bearbeitung ermöglicht.

Diese Aufgabe wird gelöst durch eine Speicheranordnung für Bearbeitungsmaschinen nach dem Kennzeichen des Anspruchs 1. Die radiale Bewegung des Greifarmes wird auf das absolute Minimum begrenzt.

Bevorzugte Weiterbildungen der Erfindung ergeben sich aus den abhängigen Ansprüchen.

Es ist von Vorteil, dass die Speicheranordnung auf beliebiger Art an jede Bearbeitungsmaschine angebaut werden kann. Dies wird dadurch erreicht, dass in einer vertikale verlaufenden Aussenwand der Speicheranordnung eine Übergabeöffnung ausgebildet ist. Dies wird auch dadurch erreicht, dass die Lagertablare aus Lagermodulen modular aufgebaut ist.

Es ist auch von Vorteil, dass die Speicheranordnung einen minimalen Energieverbrauch aufweist. Dies wird dadurch erreicht, dass der Greifarm eine einzige Greifhalterung für die Werkzeuge oder Werkstücke aufweist.

Es ist weiter auch von Vorteil, dass die Bereitstellungszeit für die Werkzeuge und/oder Werkstücke minimal ist. Dies wird dadurch erreicht, dass die Arbeitsschritte Aus- oder Einlagern des Werkzeuges und Aus- oder Einbauen des Werkzeuges von zwei räumlich getrennten und gleichzeitig arbeitenden Manipulatoren durchgeführt werden.

Ein Ausführungsbeispiel der Erfindung wird anhand der Figuren beschrieben. Es zeigen:
Figur 1 eine perspektivische Sicht auf eine erfindungsgemässe Speicheranordnung für Bearbeitungsmaschinen,
Figur 2 eine Seitenansicht auf die Anordnung von Figur 1,
Figur 3 eine weitere Seitenansicht auf die Anordnung von Figur 1,
Figur 4 eine Sicht von Oben auf einem Teil der Anordnung von Figur 1,
Figur 5 eine perspektivische Sicht auf einem Ausschnitt der Anordnung von Figur 1,
Figur 6 eine perspektivische Sicht auf einem Teil der Speicheranordnung und
Figur 7 eine perspektivische Sicht auf einem weiteren Ausschnitt der Speicheranordnung von Figur 1.

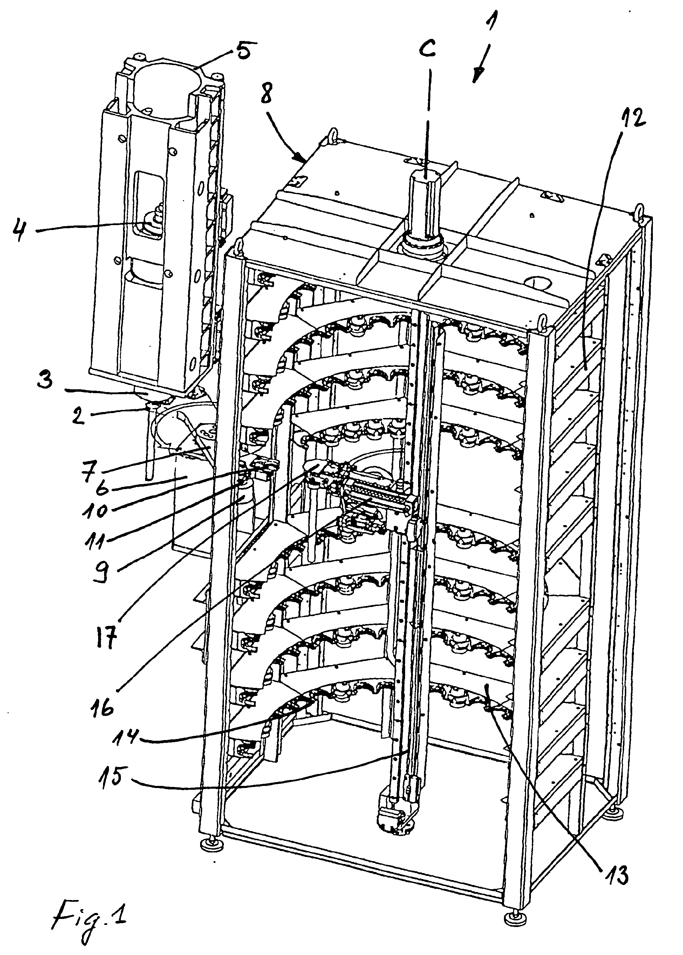

In Figur 1 ist eine Speicheranordnung 1 für eine Bearbeitungsmaschine perspektivisch dargestellt. Von der Bearbeitungsmaschine sind lediglich eine Werkzeugspindel 2, eine Werkzeugaufnahme 3, ein Spindelantriebsmotor 4 und ein Spindelführungsschlitten 5 dargestellt. Zwischen der Bearbeitungsmaschine und der eigentlichen Speicheranordnung 1 ist eine Übergabestation 6 mit einem Wechselarm 7, angeordnet. Die Übergabestation 6 ist freistehend auf der Maschinenbasis befestigt. Der Wechselarm 7 wird von einem computergesteuerten Servomotor 9 angetrieben und ist führt lediglich eine kreisförmige Bewegung um die Antriebsachse des Servomotors 9 aus. Der Wechselarm 7 weist an seinem freien Ende zwei Übergabehalterungen 10,11 für Werkzeuge und/oder Werkstücke auf und wird deshalb auch als Doppelwechselarm bezeichnet.

Die eigentliche Speicheranordnung 1 ist wie ein Turmregal ausgebildet und enthält im vorliegenden Ausführungsbeispiel neun vertikal über einander angeordneten Lagertablare 12. Jedes Lagertablar 12 ist aus fünf teilkreisförmige Lagermodule 13 zusammengesetzt. Ein Lagertablar 12 umfasst mindestens fünf Achtel eines Kreises, kann aber auch auf sechs oder sieben Achtel ausgebaut werden. In jedem Modul 13 sind fünf Lagerhalterungen 14 für Werkzeuge und/oder Werkstücke ausgebildet. Die Lagerhalterungen 14 in den Lagertablaren 12 haben die gleichen Abmessungen und die gleichen Funktionen wie die Übergabehalterungen 10,11 am Doppelwechselarm 7. Je nach Grösse der Werkzeuge und/oder der Werkstücke können pro Lagermodul 13 mehr oder weniger Lagerhalterungen 14 ausgebildet werden. Der Abstand von einem Lagertablar zum nächsten wird bestimmt durch die maximale Grösse des Werkzeuges.

Der modulare Aufbau des Turmregals erlaubt eine spätere Erweiterung der Speicherkapazität der Speicheranordnung 1. Im vorliegenden Beispiel ist der Platz für mehr als 200 Lagerhalterungen 14 vorgesehen. Das Turmregal ist eine einfache modulare Konstruktion, die mit Wandblechen abgeschlossen werden kann und so eine stabil zusammengesetzte Speichereinheit bildet. Mehrere Werkzeugspeicheranordnungen 1 zu mehreren Maschinen können über hier nicht dargestellte übergeordnete Krananlagen miteinander verbunden werden. Die Werkzeuge können dann über die Dachpartie an dem jeweiligen Werkzeugspeicher zu- und abgeführt werden.

Die Lagerhalterungen 14 sind auf einem Kreis angeordnet. Im Mittelpunkt dieses Kreises ist eine Führung 15 angeordnet. Die Führung 15 trägt einen Greifarm 16 und ist selber um die Achse C durch den Mittelpunkt des Kreises drehbar angeordnet, der durch die Halterungen 14 gebildet wird. Der Greifarm 16 ist als ein Führungsschlitten in horizontaler Richtung ausgebildet und weist an seinem freien Ende eine einzige Greifhalterung 17 auf. Die Greifhalterung 17 ist in Bezug auf dem Greifarm 16 linear bewegbar angeordnet. Der Greifarm 16 mit der Greifhalterung 17 kann somit eine vertikale, eine horizontale und eine radiale Bewegung ausführen. Die radiale Bewegung des Greifarms 16 ist nicht grösser als nötig für die Bewegung der Werkzeuge und/oder Werkstücke in und aus den Lagerhalterungen 14 des Lagertablars 12. Da der Greifarm 16 keine grössere Bewegungen machen muss, übt der Greifarm 16 auch im beladenen Zustand kein grösseres Drehmoment auf die Führung 15 aus. Der Greifarm 16 bewegt jeweils nur ein Werkzeug oder Werkstück. Die übrigen Werkzeuge sind stationär in den Lagerhalterungen 14 gelagert. Es müssen keine unnötigen Massen bewegt werden, was zu einer möglichst leichten und energiegünstigen Bauweise der Speicheranordnung 1 führt.

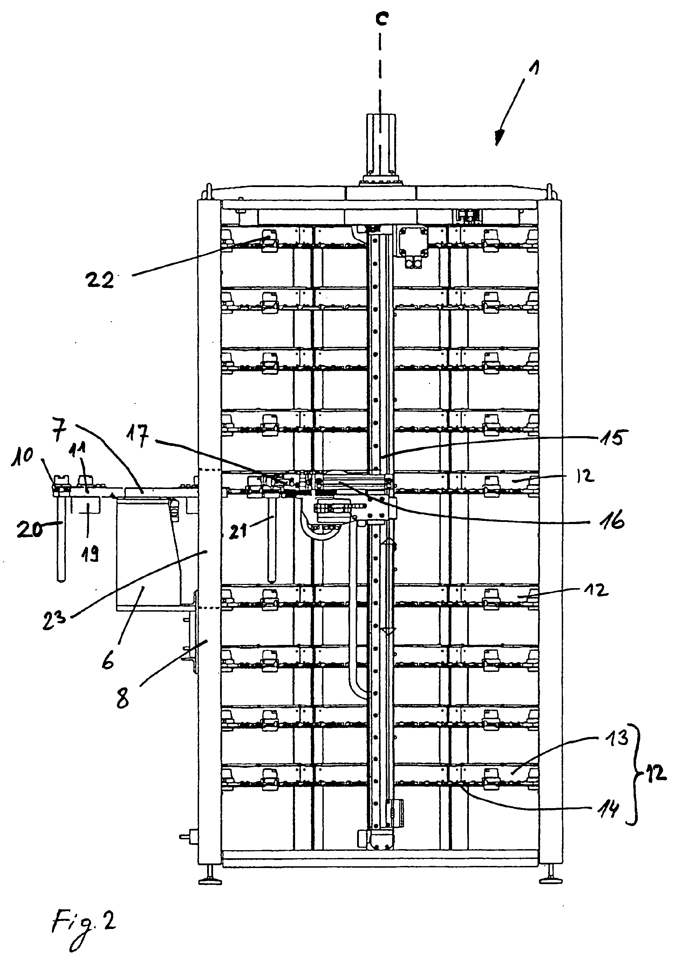

In Figur 2 ist die Speicheranordnung 1 in der Ansicht von vorne dargestellt. Die gleichen Referenznummern beziehen sich auf die gleichen Merkmale wie in Figur 1. In Figur 2 ist ersichtlich, wie die Übergabestation 6 an der Seitenwand 8 der Speicheranordnung 1 auf halber Höhe zwischen zwei Lagertablaren 12 befestigt ist. Die Höhe kann jedoch an der jeweiligen Werkzeugmaschine angepasst werden. In der Übergabehalterung 11 des Wechselarmes 7 befindet sich ein Werkzeug 19, in der Übergabehalterung 10 befindet sich ein weiteres Werkzeug oder Werkstück 20, in der Greifhalterung 17 des Greifarmes 16 befindet sich ein weiteres Werkzeug 21 und im zuoberst angeordneten Lagertablar 12 befindet sich ein weiteres Werkzeug oder Werkstück 22. Zwischen zwei Lagertablaren 12 wurde einen Freiraum gelassen, in dem eine Übergabeöffnung 23 für die Übergabestation 6 ausgebildet wurde.

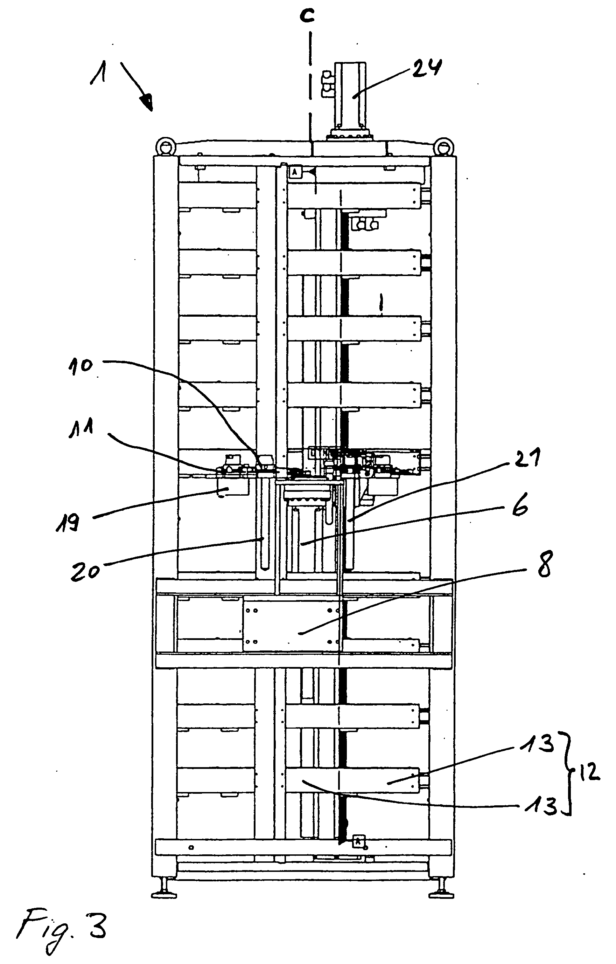

In Figur 3 ist die Speicheranordnung 1 gesehen auf der Seitenwand 8 dargestellt. Die Lagermodule 13, die zusammen das Lagertablar 12 bilden, sind mit einer rechtwinklig gebogenen Blechplatte abgedeckt. Die Abdeckung schützt die Lagerhalterungen 14 vor Verschmutzung von Aussen und verhindert, das Kühl- und Schmierflüssigkeit von den oben liegenden Lagertablaren auf die Werkzeuge tropfen. Oben auf der Speicheranordnung 1 ist ein Antriebsmotor 24 ersichtlich, der zum drehbaren Antrieb der Führung 15 um die Achse C dient.

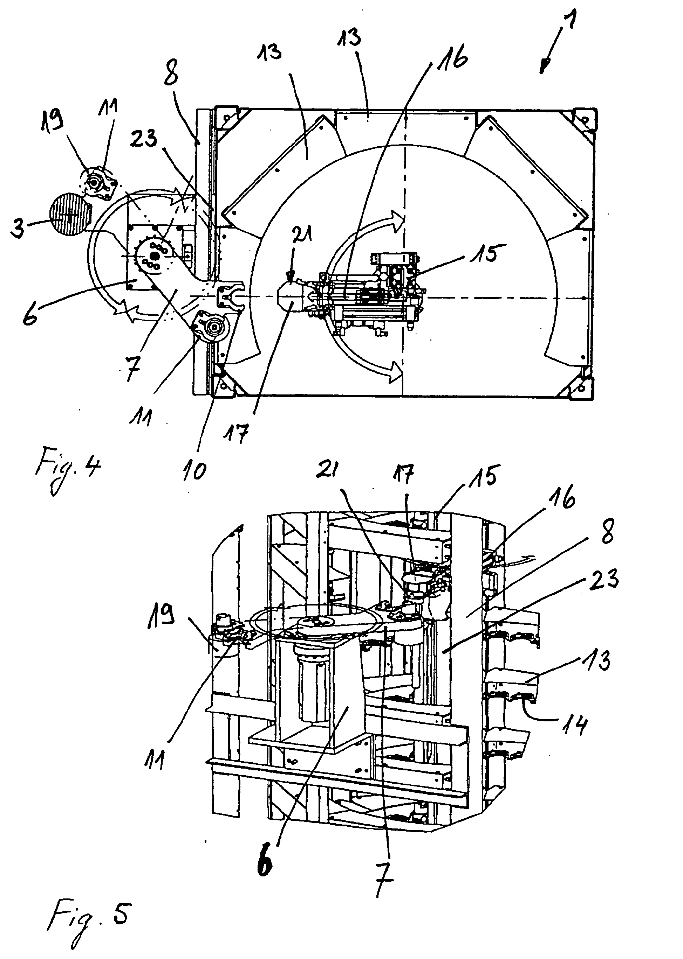

In der Figur 4 ist die Speicheranordnung 1 in der Sicht von oben auf einem Lagertablar 12 dargestellt. Die Speicheranordnung 1 ist geschnitten im Bereich des Freiraumes zwischen zwei Lagertablaren 12 dargestellt. Hier ist gut ersichtlich, wie die Übergabehalterungen 10,11 des Wechselarmes 7 bewegbar auf einem Kreis angeordnet sind, der an dem durch die Lagerhalterungen 14 gebildeten Kreis tangiert. Mit gestrichelten Linien ist angegeben, wie der Wechselarm 7 von einer ersten Übergabeposition in der Speicheranordnung 1 zu einer zweiten Übergabeposition in der Bearbeitungsmaschine wechselt. Die Greifhalterung 17 des Greifarmes 16 befindet sich in der radial eingefahrenen Position. In dieser Position kann der Greifarm 16 von der Übergabestation 6 zu einem der zahlreichen Lagerhalterungen 14 durch eine Drehbewegung des Greifarmes 16 in der horizontalen Ebene und/oder durch eine vertikale Bewegung entlang der Führung 15 bewegt werden.

Der Wechselarm 7 und der Greifarm 16 werden unabhängig von einander angetrieben und gesteuert und können gleichzeitig bewegt werden. Durch diese Unabhängigkeit und durch eine geeignete Steuerung kann das eine Werkzeug 21 ein- oder ausgelagert werden, während das andere Werkzeug 19 an die Bearbeitungsmaschine übergeben und ausgewechselt wird. Der maximale Drehkreis des Greifarmes 16 und der Drehkreis des Wechselarmes 7 berühren sich nur an einem Punkt, nämlich bei dem Wechsel des Werkzeuges vom Greifarm 16 zum Wechselarm 7 oder umgekehrt. Durch die Trennung von Werkzeugspeicherung und Werkzeugwechsel kann die Stillstandszeit der Bearbeitungsmaschine erheblich verkürzt werden. Die so erreichten kurzen Bereitstellungszeiten bringen eine einzigartige Wirtschaftlichkeit für das Bearbeitungszentrum.

In Figur 5 ist schematisch die Übergabe eines Werkzeuges von dem Greifarm 16 zum Wechselarm 7 dargestellt. Der Wechselarm 7 weist zwei Übergabehalterungen 10,11 auf, wogegen der Greifarm 16 lediglich eine Greifhalterung 17 aufweist. Jeweils eine der Übergabehalterungen 10,11 wird betätigt auf der Seite der Speicheranordnung 1 und eine andere auf der Seite der Bearbeitungsmaschine.

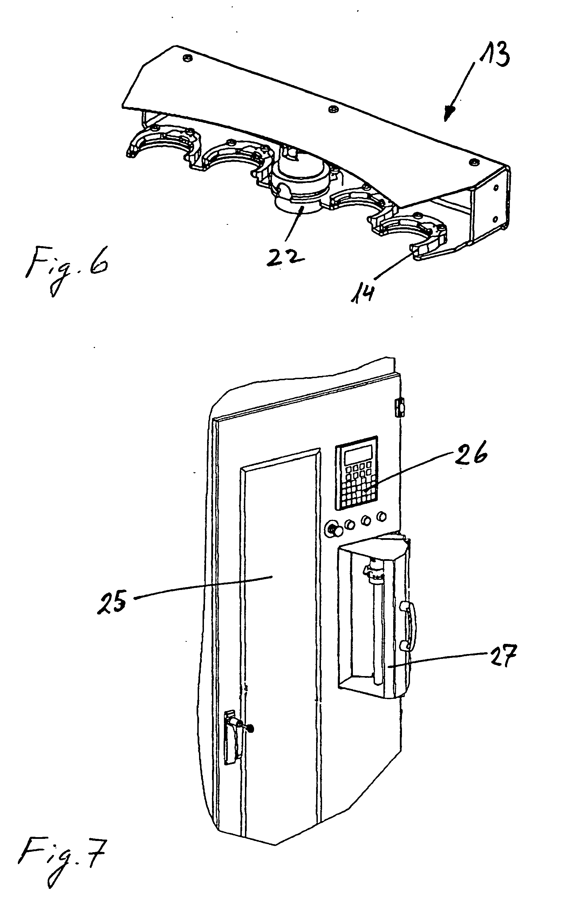

In Figur 6 ist perspektivisch ein einzelnes Lagermodul 13 mit fünf Lagerhalterungen 14 dargestellt. Hier ist gut ersichtlich, wie die Werkzeuge und/oder Werkstücke gegen Verschmutzung und herunter tropfende Flüssigkeit geschützt werden können.

In Figur 7 ist schematisch eine Zugangstüre 25 mit einer Bedienkonsole 26 und eine Einfuhrstation 27 zum Einführen einzelner Werkzeuge oder Werkstücke dargestellt. Die Einführstation 27 befindet sich auf einer ergonomisch günstigen Höhe, jedoch auf einer anderen Seite der Speicheranordnung 1, gegenüber oder neben der Übergabestation 6. Je nach Platzverhältnisse kann die Zugangstüre 25 auf der der Seitenwand 8 gegenüberliegenden Seitenwand oder auf der dazwischen liegenden Vorderwand der Speicheranordnung 1 angeordnet sein.

Weil die Speicheranordnung 1 modular zusammengebaut ist, kann sie auf beliebiger Art an eine Bearbeitungsmaschine angebunden werden. In der Höhe ist das Turmregal beliebig erweiterbar. Es ist auch denkbar, zwei spiegelbildlich ausgeführten Speicheranordnungen 1 an einer einzigen Bearbeitungsmaschine anzubinden. Das Turmregal wird als einfache aber trotzdem stabile Blechkonstruktion ausgeführt. Weil im Turmregal jeweils nur ein Werkzeug über einen möglichst kurzen Weg vom Greifarm 16 bewegt wird, bleibt der Energieaufwand für die Ein- und Auslagerung auf das absolute Minimum beschränkt. Der Greifarm 16 ist als einfacher dreiachsiger Manipulator mit Servomotoren ausgebildet. Der Wechselarm 7 ist ein einfacher drehbarer Arm der von einem computergesteuerten Servomotor an mindestens vier unterschiedlichen Winkelpositionen angehalten werden kann.

## Patentansprüche

1. Speicheranordnung (1) für Bearbeitungsmaschinen umfassend mindestens zwei vertikal über einander angeordnete Lagertablare (12) jeweils mit einer Vielzahl von Werkzeug- oder Werkstückhalterungen (14), wobei die Werkzeug- oder Werkstückhalterungen (14) auf einem Kreis angeordnet sind, und ein bewegbarer Greifarm (16), der drehbar um eine Achse durch den Mittelpunkt des durch die Lagerhalterungen (14) gebildeten Kreises angeordnet ist, der weiterhin in Bezug auf den Lagertablaren (12) in vertikaler Richtung bewegbar angeordnet ist und der weiterhin horizontal und radial aus dem Kreismittelpunkt heraus bewegbar angeordnet ist, **dadurch gekennzeichnet, dass** der Greifarm (16) dazu geeignet ist, bei dessen horizontaler Bewegung maximal einen Weg zurückzulegen, der übereinstimmt mit dem Radius des durch die Lagerhalterungen (14) gebildeten Kreises und dass zwischen der Bearbeitungsmaschine und der Speicheranordnung (1) eine Übergabestation (6) mit einem kreisförmig beweglichen Wechselarm (7) angeordnet ist, wobei der Bewegungskreis des Wechselarmes (7) den maximalen Bewegungskreis des Greifarmes (16) tangiert.

2. Speicheranordnung (1) nach dem Anspruch 1, **dadurch gekennzeichnet, dass** zwischen zwei der vertikal übereinander angeordneten Lagertablare (12) ein Freiraum ausgebildet ist.

3. Speicheranordnung (1) nach Anspruch 2, **dadurch gekennzeichnet, dass** im Bereich des Freiraumes in einer vertikal verlaufenden Aussenwand (8) der Speicheranordnung (1) eine Übergabeöffnung (23) ausgebildet ist.

4. Speicheranordnung (1) nach Anspruch 3, **dadurch gekennzeichnet, dass** durch die Übergabeöffnung (23) zwischen zwei Lagertablaren (12) ein Wechselarm (7) in die Speicheranordnung (1) drehbar eingreifend angeordnet ist.

5. Speicheranordnung (1) nach dem Anspruch 4, **dadurch gekennzeichnet, dass** der Wechselarm (7) zwei Übergabehalterungen (10,11) für die Werkstücke oder Werkzeuge aufweist, wobei die Übergabehalterungen (10,11) auf einem Kreis angeordnet sind.

6. Speicheranordnung (1) nach Anspruch 5, **dadurch gekennzeichnet, dass** bei der Drehbewegung des Wechselarmes (7) die Übergabehalterungen (10,11) des Wechselarmes (7) einen Kreis beschreiben, der an dem durch die Lagerhalterungen (14) gebildeten Kreis tangiert.

7. Speicheranordnung (1) nach einem der Ansprüche 1 bis 6, **dadurch gekennzeichnet, dass** der Greifarm (16) eine einzige Greifhalterung (17) für die Werkstücke oder Werkzeuge aufweist.

8. Speicheranordnung (1) nach einem der Ansprüche 1 bis 7, **dadurch gekennzeichnet, dass** die Lagertablare (12) aus Lagermodulen (13) modular aufgebaut sind.

9. Speicheranordnung (1) nach einem der Ansprüche 1 bis 8, **dadurch gekennzeichnet, dass** die kreisförmig angeordneten Lagertablare (12) jeweils mindestens fünf Achtel eines Kreises umfassen.

## Claims

1. Storage arrangement (1) for machine tools, comprising at least two storage shelves (12) arranged vertically one above the other, respectively having a multiplicity of tool or workpiece holders (14), the tool or workpiece holders (14) being arranged in a circle, and a movable gripping arm (16), which is arranged so as to be rotatable about an axis through the centre-point of the circle formed by the storage holders (14), which, furthermore, is arranged so as to be movable in the vertical direction in relation to the storage shelves (12) and which, furthermore, is arranged so as to be movable horizontally and radially from the circle centre-point, **characterized in that** the gripping arm (16) is suitable for, in its horizontal movement, maximally covering a distance corresponding to the radius of the circle formed by the storage holders (14), and **in that** between the machine tool and the storage arrangement (1) there is arranged a transfer station (6) having a circularly movable changing arm (7), the circle of movement of the changing arm (7) being tangential to the maximum circle of movement of the gripping arm (16).

2. Storage arrangement (1) according to Claim 1, **characterized in that** a free space is configured between two of the storage shelves (12) arranged vertically one above the other.

3. Storage arrangement (1) according to Claim 2, **characterized in that** a transfer opening (23) is configured in the region of the free space, in a vertically extending outer wall (8) of the storage arrangement (1).

4. Storage arrangement (1) according to Claim 3, **characterized in that** a changing arm (7) is arranged so as to engage rotatably into the storage arrangement (1) through the transfer opening (23) between two storage shelves (12).

5. Storage arrangement (1) according to Claim 4, **characterized in that** the changing arm (7) has two transfer holders (10, 11) for the workpieces or tools, the transfer holders (10, 11) being arranged in a circle.

6. Storage arrangement (1) according to Claim 5, **characterized in that**, during the rotary movement of the changing arm (7), the transfer holders (10, 11) of the changing arm (7) describe a circle tangential to the circle formed by the storage holders (14).

7. Storage arrangement (1) according to one of Claims 1 to 6, **characterized in that** the gripping arm (16) has a single gripping holder (17) for the workpieces or tools.

8. Storage arrangement (1) according to one of Claims 1 to 7, **characterized in that** the storage shelves (12) are modularly constructed from storage modules (13).

9. Storage arrangement (1) according to one of Claims 1 to 8, **characterized in that** the circularly arranged storage shelves (12) respectively comprise at least five-eighths of a circle.

## Revendications

1. Système de stockage (1) pour machines d'usinage, qui comprend au moins deux tablettes d'entreposage (12) disposées l'une au-dessus de l'autre à la verticale, chacune dotée de plusieurs supports (14) d'outils ou de pièces, les supports (14) d'outils ou de pièces étant disposés sur un cercle, et un bras mobile de saisie (16) disposé à rotation autour d'un axe qui passe par le centre du cercle formé par les supports d'entreposage (14), en outre disposé de manière à pouvoir se déplacer dans la direction verticale par rapport aux tablettes d'entreposage (12) et en outre disposé de façon à pouvoir être déplacé à l'horizontale et radialement hors du centre du cercle, **caractérisé en ce que** le bras de saisie (16) peut parcourir lors de son déplacement horizontal une trajectoire qui correspond au maximum au rayon du cercle formé par le support d'entreposage (14) et **en ce qu'**un poste de transfert (6) doté d'un bras de remplacement (7) capable de se déplacer en cercle est disposé entre la machine d'usinage et le système de stockage (1), le cercle de déplacement du bras de remplacement (7) étant tangent au cercle de déplacement maximal du bras de saisie (16).

2. Système de stockage (1) selon la revendication 1, **caractérisé en ce qu'** un espace libre est formé entre deux tablettes d'entreposage (12) disposées l'une au-dessus de l'autre à la verticale.

3. Système de stockage (1) selon la revendication 2, **caractérisé en ce que** dans la zone de l'espace libre, une ouverture de transfert (23) est formée dans une paroi extérieure verticale (8) du système de stockage (1).

4. Système de stockage (1) selon la revendication 3, **caractérisé en ce qu'**un bras de remplacement (7) est disposé de manière à pouvoir s'engager par rotation dans le système de stockage (1) par l'ouverture de transfert (23) prévue entre deux tablettes d'entreposage (12).

5. Système de stockage (1) selon la revendication 4, **caractérisé en ce que** le bras de remplacement (7) présente deux supports de transfert (10, 11) pour les pièces ou les outils, les supports de transfert (10, 11) étant disposés sur un cercle.

6. Système de stockage (1) selon la revendication 5, **caractérisé en ce que** lorsque le bras de remplacement (7) se déplace en rotation, les équipements de transfert (10, 11) du bras de remplacement (7) décrivent un cercle tangent au cercle formé par les supports d'entreposage (14).

7. Système de stockage (1) selon l'une des revendications 1 à 6, **caractérisé en ce que** le bras de saisie (16) présente un seul support de saisie (17) pour les pièces et pour les outils.

8. Système de stockage (1) selon l'une des revendications 1 à 7, **caractérisé en ce que** les tablettes d'entreposage (12) ont une structure modulaire constituée de modules d'entreposage (13).

9. Système de stockage (1) selon l'une des revendications 1 à 8, **caractérisé en ce que** les tablettes d'entreposage (12) disposées en cercle couvrent chacune au moins cinq huitièmes d'un cercle.
